(19) Europäisches Patentamt / European Patent Office / Office européen des brevets

(11) **EP 3 873 956 B1**

(12) # EUROPEAN PATENT SPECIFICATION

(45) Date of publication and mention of the grant of the patent:
**16.11.2022 Bulletin 2022/46**

(21) Application number: **19809666.1**

(22) Date of filing: **25.10.2019**

(51) International Patent Classification (IPC):
***C08F 283/12*** (2006.01) ***C08F 2/18*** (2006.01)
***C08F 285/00*** (2006.01) ***C09D 151/00*** (2006.01)
***C09D 151/08*** (2006.01)

(52) Cooperative Patent Classification (CPC):
(C-Sets available)
**C08F 2/18; C08F 283/12; C08F 285/00; C09D 151/003; C09D 151/085** (Cont.)

(86) International application number:
**PCT/US2019/057984**

(87) International publication number:
**WO 2020/092138 (07.05.2020 Gazette 2020/19)**

(54) **AQUEOUS DISPERSION OF POLYMERIC COMPOSITE MICROSPHERES**
WÄSSRIGE DISPERSION VON POLYMEREN KOMPOSITMIKROKÜGELCHEN
DISPERSION AQUEUSE DE MICROSPHÈRES COMPOSITES POLYMÈRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.10.2018 US 201862752435 P**

(43) Date of publication of application:
**08.09.2021 Bulletin 2021/36**

(73) Proprietors:
- **Rohm and Haas Company**
  **Collegeville, PA 19426 (US)**
- **Dow Silicones Corporation**
  **Midland, Michigan 48686 (US)**

(72) Inventors:
- **ERYAZICI, Ibrahim**
  **Collegeville, Pennsylvania 19426 (US)**
- **GRANT, Joseph**
  **Collegeville, Pennsylvania 19426 (US)**
- **KATZENSTEIN, Joshua M.**
  **Auburn, Michigan 48686 (US)**
- **LIU, Yihan**
  **Auburn, Michigan 48686 (US)**
- **NUNGESSER, Edwin A.**
  **Collegeville, Pennsylvania 19426 (US)**
- **ZIMMERMAN, Brett**
  **Auburn, Michigan 48686 (US)**

(74) Representative: **Beck Greener LLP**
**Fulwood House**
**12 Fulwood Place**
**London WC1V 6HR (GB)**

(56) References cited:
**EP-A1- 3 031 837** **JP-A- 2017 226 751**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 873 956 B1

(52) Cooperative Patent Classification (CPC): (Cont.)

C-Sets
**C08F 283/12, C08F 230/02, C08F 220/1804, C08F 222/10;**
**C08F 285/00, C08F 220/1804, C08F 222/10, C08F 230/02**

## Description

### Background of the Invention

The present invention relates to an aqueous dispersion of polymeric composite microspheres that comprise a polysiloxane and an organophosphate functionalized polymer. The composite microspheres are useful for preparing formulations that form defective free coatings with a low coefficient of friction.

Low-gloss (matte, low-sheen) surfaces can be made applying to a substrate an aqueous dispersion containing organic or inorganic matting agents as well as binders. Organic non-film-forming matting agents in the range of 1-30 μm are preferred in part because they provide ease of application with desired surface roughness. Aqueous dispersions of silicone (polysiloxane) are commonly used in conjunction with matting agents to reduce the coefficient of friction of the final coating surface, thereby improving wear resistance. However, in general, these silicone dispersions are not compatible with aqueous coating compositions because they cause film defects. Silicone dispersions therefore need to be specially designed to be compatible, which is a time-consuming and costly solution.

EP3031837 discloses a method for preparing an aqueous dispersion of phosphorus acid functionalized core-shell polymer particles comprising the steps of a) contacting under emulsion polymerization conditions i) a first monomer emulsion with ii) an aqueous dispersion of acid functionalized polymer particles having an average particle size of from 80 to 180 nm to form an aqueous dispersion of core-shell polymer particles; then b) plasticizing the shell portion of the core-shell polymer particles with a polymerizable plasticizing agent; then c) contacting the core-shell polymer particles with an aqueous base to swell the core without substantially polymerizing the plasticizing agent; then d) polymerizing the plasticizing agent; wherein the first monomer emulsion comprises a) from 0.1 to 5 weight percent of a phosphorus acid monomer, based on the weight of the monomers in the first monomer emulsion.

US 9,809,705 B2 and US 9,808,413 B2 disclose modified unreactive (non-polymerizable) silicones fixed within polymer microspheres made by suspension polymerization in a batch process, at a solids content of about 25 weight percent.

Similarly, JP 04489052 B2, JP 04794313 B2, JP 03821719 B2, JP 03784292 B2, JP 03770815 B2, JP 03669898 B2, JP 03580754 B2, and JP 05231004 B2 disclose composite particles with designed shapes (convex, bowl, flat, curved, etc.) made by polymerizing ethylenically unsaturated monomers in the presence of non-polymerizable silicones in the same particle in a batch suspension polymerization process. However, to achieve high solids (> 30 %), the disclosed batch process either requires the use of inexpensive monomers with slow suspension polymerization reactivity (e.g., styrene or methyl methacrylate) or more reactive but expensive monomers (e.g., lauryl methacrylate or stearyl methacrylate).

It would be possible to reduce cycle times and increase solids content by increasing the concentration of the silicone additive, but this solution is impractical because of the high cost of silicones. Consequently, these aqueous dispersions of micron-sized silicone-composites are not used to coat substrates; instead, they find a niche in personal care and electronics applications where small amounts are used as part of the entire formulations.

Accordingly, it would be desirable in the field of organic matting agents to discover a way to prepare by suspension polymerization a low cost dispersion of organic microspheres that provides a coating with a low coefficient of friction and without defects.

### Summary of the Invention

The present invention addresses a need in the art by providing, in a first aspect, a process for preparing an aqueous dispersion of organic phosphate functionalized composite microspheres comprising the step of contacting, under polymerization conditions, an aqueous dispersion of first composite microspheres comprising a polysiloxane and structural units of a first monoethylenically unsaturated nonionic monomer with first stage monomers comprising, based on the weight of the first stage monomers, from a) 0.05 to 5 weight percent of a polymerizable organic phosphate or a salt thereof; and b) from 85 to 99.95 weight percent of a second monoethylenically unsaturated nonionic monomer, to grow out the first composite microspheres to form an aqueous dispersion of organic phosphate functionalized second composite microspheres, wherein the first composite microspheres have an average particle size in the range of from 1 μm to 15 μm and the second composite microspheres have an average particle size in the range of from 1.1 μm and 25 μm; and wherein the polymerizable organic phosphate is represented by the compound of Formula I:

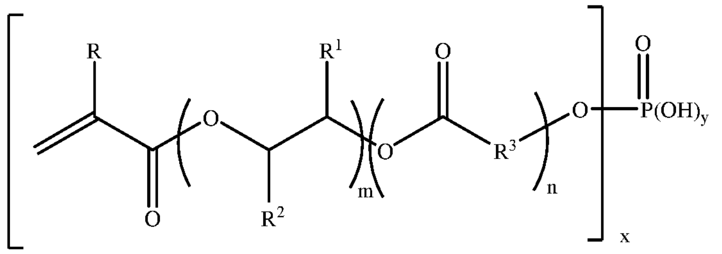

I

;

or a salt thereof; wherein R is H or $CH_3$, wherein $R^1$ and $R^2$ are each independently H or $CH_3$, with the proviso that no two adjacent $CR^2CR^1$ groups are each substituted with methyl groups; each $R^3$ is independently linear or branched $C_2$-$C_6$ alkylene; m is from 1 to 10 and n is from 0 to 5, with the proviso that when m is 1, n is 1 to 5; x is 1 or 2; and y is 1 or 2; and x + y = 3.

In a second aspect, the present invention is a composition comprising an aqueous dispersion of polymeric composite microspheres comprising from 0.3 to 70 weight percent of a polysiloxane and from 30 to 99.7 weight percent an organophosphate functionalized polymer, wherein the organophosphate functionalized polymer comprises, based on the weight of the organophosphate polymer, from 85 to 99.9 weight percent structural units of a monoethylenically unsaturated nonionic monomer and from 0.05 to 5 weight percent structural units of a polymerizable organic phosphate or a salt thereof, which is represented by Formula I:

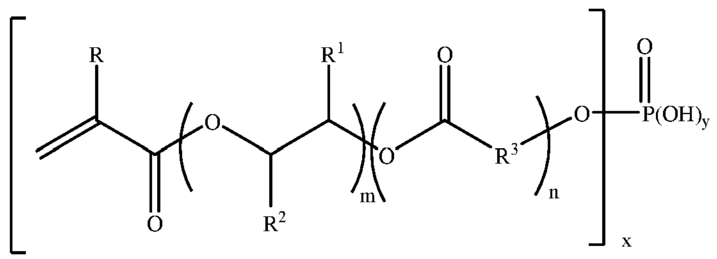

I

or a salt thereof; wherein R is H or $CH_3$, wherein $R^1$ and $R^2$ are each independently H or $CH_3$, with the proviso that no two adjacent $CR^2CR^1$ groups are each substituted with methyl groups; each $R^3$ is independently linear or branched $C_2$-$C_6$ alkylene; m is from 1 to 10 and n is from 0 to 5, with the proviso that when m is 1, n is 1 to 5; x is 1 or 2; and y is 1 or 2; and x + y = 3; wherein the polymeric microspheres have a solids content in the range of from 10 to 60 weight percent, based on the weight of the microspheres and water; wherein the polymeric microspheres have an average particle size in the range of from 1 μm to 25 μm. The present invention addresses a need in the art by providing a composition that is useful for making defect free coatings with a low coefficient of friction.

Detailed Description of the Invention

The present invention is a process for preparing an aqueous dispersion of organic phosphate functionalized composite microspheres comprising the step of contacting, under polymerization conditions, an aqueous dispersion of first composite microspheres comprising a polysiloxane and structural units of a first monoethylenically unsaturated nonionic monomer with first stage monomers comprising, based on the weight of the first stage monomers, from a) 0.05 to 5 weight percent of a polymerizable organic phosphate or a salt thereof; and b) from 85 to 99.95 weight percent of a second monoethylenically unsaturated nonionic monomer, to grow out the first composite microspheres to form an aqueous dispersion of organic phosphate functionalized second composite microspheres, wherein the first composite microspheres have an average particle size in the range of from 1 μm to 15 μm and the second composite microspheres have an average particle size in the range of from 1.1 μm and 25 μm; and wherein the polymerizable organic phosphate is represented by Formula I:

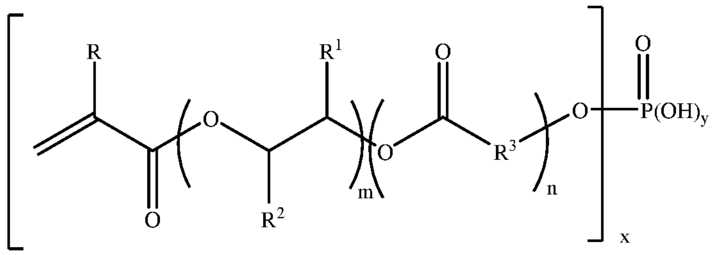

I

;

or a salt thereof; wherein R is H or $CH_3$, wherein $R^1$ and $R^2$ are each independently H or $CH_3$, with the proviso that no two adjacent $CR^2CR^1$ groups are each substituted with methyl groups; each $R^3$ is independently linear or branched $C_2$-$C_6$ alkylene; m is from 1 to 10 and n is from 0 to 5, with the proviso that when m is 1, n is 1 to 5; x is 1 or 2; and y is 1 or 2; and x + y = 3.

In a preferred aspect of the present invention, n is 0, x is 1, and y is 2, which gives the structure of Formula II:

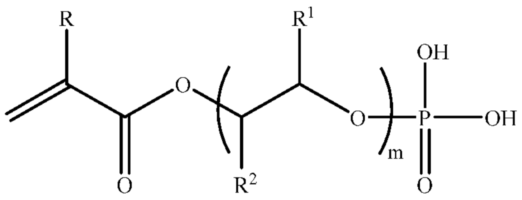

II

;

Preferably, R is $CH_3$, one of $R^1$ and $R^2$ is H, and the other of $R^1$ and $R^2$ is $CH_3$; more preferably, each $R^2$ is H and each $R^1$ is $CH_3$; m is preferably from 3, and more preferably from 4; to preferably to 8, and more preferably to 6. Sipomer PAM-100, Sipomer PAM-200 and Sipomer PAM-600 phosphate esters are examples of commercially available compounds of Formula II.

In another preferred aspect of the present invention, n is 1; m is 1; R is $CH_3$; $R^1$ and $R^2$ are each H; $R^3$ is $-(CH_2)_5-$; x is 1 or 2; y is 1 or 2; and x + y = 3, resulting in structure of Formula III:

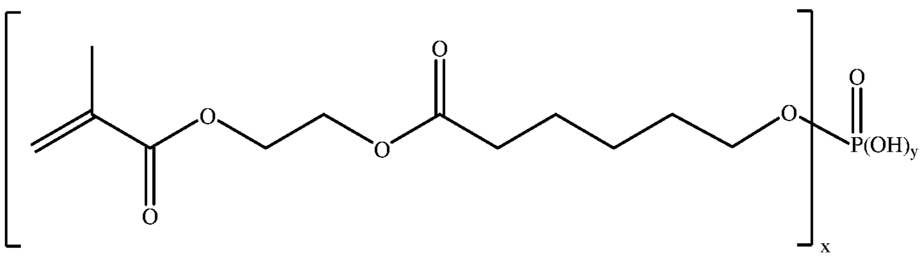

III

A commercially available compound within the scope of Formula III is Kayamer PM-21 phosphate ester.

As used herein, the term "structural unit" of the named monomer, refers to the remnant of the monomer after polymerization. For example, a structural unit of a subgenus of polymerizable organic phosphates is illustrated by the following structure:

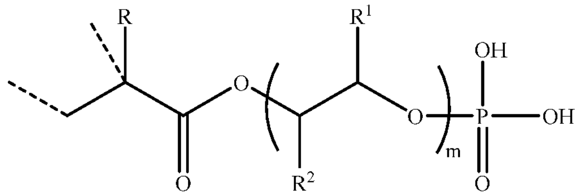

Where R, $R^1$, $R^2$, and m are previously defined, and wherein the dotted lines represent the points of attachment of the structural unit to the microsphere.

As used herein "composite microspheres" refer to micron-size polymer particles in which polysiloxane and the polymer comprising structural units of the ethylenically unsaturated nonionic monomer and the polymerizable organic phosphate (the organophosphate polymer) are physically incorporated into the same particle.

The polysiloxane is linear, branched, or crosslinked or combinations thereof, and comprises repeat units of Si-O-Si groups and Si-alkyl groups; the polysiloxane optionally comprises, for example, Si-O-alkyl, Si-aryl, Si-OH, Si-H, and/or Si-O-trialkylsilyl groups. Preferably, the polysiloxane is a linear polymer represented by Formula IV:

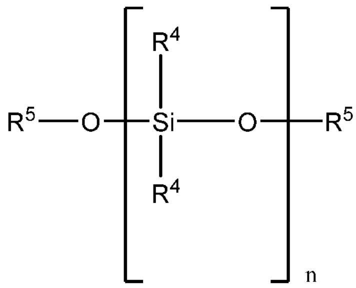

IV

wherein each $R^4$ is independently $C_1$-$C_{30}$-alkyl, O-$C_1$-$C_6$-alkyl, or H, with the proviso that at least one $R^4$ is $C_1$-$C_{30}$-alkyl; each $R^5$ is independently $C_1$-$C_{30}$-alkyl, H, or $Si(R^6)_3$; wherein each $R^6$ is independently $C_1$-$C_6$-alkyl; and n is from 4, more preferably from 10, to 10,000, more preferably to 5000. Preferably, each $R^4$ is independently $C_1$-$C_6$-alkyl, more preferably ethyl or methyl, most preferably methyl; preferably, each $R^5$ is H; and preferably each $R^6$ is methyl.

The polysiloxane is preferably unreactive under free-radical polymerization conditions; accordingly, the composite is preferably a physical blend of the polysiloxane and the organophosphate polymer in the same particle. Composite microsphere average particles size refer to average particle size as measured by Optical Microscopy as described hereinbelow.

The organophosphate polymer portion of the first composite microspheres preferably comprise from 90 to 99.9 weight percent structural units of a monoethylenically unsaturated nonionic monomer, examples of which include acrylates such as ethyl acrylate, butyl acrylate, and 2-ethylhexyl acrylate; methacrylates such as methyl methacrylate, n-butyl methacrylate, t-butyl methacrylate, hydroxyethyl methacrylate, hydroxypropyl methacrylate, acetoacetoxyethyl methacrylate, and ureido methacrylate; acrylonitrile; acrylamides such as acrylamide and diacetone acrylamide; styrene; and vinyl esters such as vinyl acetate. Although it is possible for the organophosphate polymer portion of the first composite microspheres to include structural units of carboxylic acid monomers such as methacrylic acid or acrylic acid, it is preferred that the organophosphate polymer portion comprises less than 5, more preferably less than 3, and most preferably less than 1 weight percent structural units of a carboxylic acid monomer, based on the weight of the organophosphate polymer portion of the first composite microspheres. The organophosphate polymer portion of the first composite microspheres more preferably comprise structural units of acrylates or methacrylates or combinations of acrylates and methacrylates.

The organophosphate polymer portion of the first composite microspheres preferably further comprises structural units of a multiethylenically unsaturated nonionic monomer, preferably at a concentration in the range of from 0.1, more preferably from 1, and most preferably from 2 weight percent, to 14.95, more preferably to 10, and most preferably to 8 weight percent, based the weight of the organophosphate polymer portion of the first composite microspheres. Examples of suitable multiethylenically unsaturated nonionic monomers include allyl methacrylate, allyl acrylate, divinyl benzene, trimethylolpropane trimethacrylate, trimethylolpropane triacrylate, butylene glycol (1,3) dimethacrylate, butylene glycol (1,3) diacrylate, ethylene glycol dimethacrylate, and ethylene glycol diacrylate.

Preferably, the particle size of the first composite microspheres is in the range of from 1.5 μm, more preferably

from 3.0 μm, preferably to 15 μm.

The first composite microspheres are advantageously prepared from an aqueous dispersion of the polysiloxane as a seed. The polysiloxane seed has an average diameter by Optical Microscopy in the range of from 0.5 μm, more preferably from 1.0 μm, and most preferably from 2.0 μm, to 15 μm, preferably to 10 μm, more preferably to 8.0 μm, and most preferably to 5.0 μm. An aqueous dispersion of polysiloxane seed is advantageously prepared by high-shear mixing in the presence of an aqueous solution of an emulsifying surfactant, preferably an anionic surfactant such as a phosphate, or an alkyl benzene sulfonate or sulfate preferably in the range of from 0.1 to 5, more preferably to 1 weight percent, based on the weight of the polysiloxane.

An aqueous dispersion of the polysiloxane seed and a hydrophobic initiator are advantageously contacted under polymerization conditions with a first monoethylenically unsaturated monomer; alternatively, monomer can be swollen into the polysiloxane seed, followed by addition of the hydrophobic initiator. The hydrophobic initiator is preferably added in the form of an aqueous dispersion.

As used herein, a hydrophobic initiator refers to an initiator having a water solubility in the range of from 5 ppm, preferably from 10 ppm, to 10,000, preferably to 1000, and more preferably to 100 ppm. Examples of suitable hydrophobic initiators include such as t-amyl peroxy-2-ethylhexanoate (water solubility = 17.6 mg/L at 20 °C) or t-butyl peroxy-2-ethylhexanoate (water solubility = 46 mg/L at 20 °C). Examples of suitable monoethylenically unsaturated nonionic monomers include acrylates such as methyl acrylate, ethyl acrylate, butyl acrylate, and 2-ethylhexyl acrylate; methacrylates such as methyl methacrylate, n-butyl methacrylate, t-butyl methacrylate, hydroxyethyl methacrylate, hydroxypropyl methacrylate, acetoacetoxyethyl methacrylate, and ureido methacrylate; acrylonitrile; acrylamides such as acrylamide and diacetone acrylamide; styrene; and vinyl esters such as vinyl acetate.

The first composite microspheres can also be prepared from an aqueous dispersion of a solution of the polysiloxane and the ethylenically unsaturated nonionic monomers. An aqueous dispersion of the solution is advantageously formed by high-shear mixing in the presence of a surfactant of the type and in the amounts used to prepare the polysiloxane seed dispersion. The aqueous dispersion of the hydrophobic initiator is then contacted with the aqueous dispersion of the solution of the polysiloxane and the ethylenically unsaturated nonionic monomers. The hydrophobic initiator may be dissolved in the dissolution step; in this instance, the choice of hydrophobic initiator is broadened because an initiator with a water-solubility of <5 ppm would be effective if the initiator is dissolved along with the polysiloxane and the ethylenically unsaturated nonionic monomers. Examples of such initiators of very low water solubility include dilauroyl peroxide, 1,1,3,3-tetramethylbutyl peroxy-2-ethylhexanoate and 2,5-dimethyl-2,5-di(2-ethylhexanoylperoxy)hexane.

In a preferred process of the present invention, the aqueous dispersion of first composite microspheres is contacted under polymerization conditions and in the presence of an emulsifying surfactant, such as a phosphate or an alkyl benzene sulfonate or sulfate, with first stage monomers comprising, based on the weight of the first stage monomers, from 0.05, preferably from 0.1, and more preferably from 0.2 weight percent, to 5, preferably to 3, more preferably to 2, and most preferably to 1 weight percent of the polymerizable organic phosphate or a salt thereof; and from 85, preferably from 90 weight percent, to 99.95, preferably to 99.8 weight percent of a second monoethylenically unsaturated nonionic monomer. The first composite microspheres increase in volume (grow out) to form an aqueous dispersion of organic phosphate functionalized second composite microspheres having a particle size in the range of from 1.1 μm, and preferably from 1.5 μm, preferably from 3.5 μm, to 25 μm, more preferably to 20 μm, and most preferably to 15 μm.

The first stage monomers preferably further comprises a multiethylenically unsaturated nonionic monomer, preferably at a concentration in the range of from 0.1, more preferably from 1, and most preferably from 2 weight percent, to 14.95, more preferably to 10, and most preferably to 8 weight percent, based the weight of first stage monomers. Examples of suitable multiethylenically unsaturated nonionic monomers include allyl methacrylate, allyl acrylate, divinyl benzene, trimethylolpropane trimethacrylate, trimethylolpropane triacrylate, butylene glycol (1,3) dimethacrylate, butylene glycol (1,3) diacrylate, ethylene glycol dimethacrylate, and ethylene glycol diacrylate.

The first stage monomer as well as the second composite microspheres preferably comprise a substantial absence of structural units of a carboxylic acid monomer. As used herein, a substantial absence of structural units of a carboxylic acid monomer means less than 5, preferably less than 3, more preferably less than 1, and most preferably less than 0.2 weight percent structural units of a carboxylic acid monomer such as methacrylic acid or acrylic acid, based on the weight of the microspheres.

The organophosphate polymer portion of the second composite microspheres preferably comprise from 90 to 98 weight percent structural units of a second monoethylenically unsaturated nonionic monomer, which may be the same as or different from the first monoethylenically unsaturated nonionic monomer. It is understood that "monomer" refers to one or more monomers.

The second composite microspheres can be contacted under polymerization conditions with monoethylenically unsaturated nonionic monomer (second stage ethylenically unsaturated nonionic monomer), which may be the same as of different from the first stage monoethylenically unsaturated nonionic monomer, to yield a dispersion of organic phosphate functionalized third composite microspheres. A water-soluble initiator/redox couple such as t-butyl hydroperoxide and isoascorbic acid (t-BHP/IAA) is advantageously used to control morphology of the third composite microspheres.

In a second aspect, the present invention is a composition comprising an aqueous dispersion of polymeric composite microspheres comprising a) from 0.3, preferably from 1 weight percent, to 70, preferably to 40 weight percent, based on the weight of the composite, of a polysiloxane; and b) from 30, preferably from 60 weight percent to 99.7, preferably to 99 weight percent of an organophosphate functionalized polymer which comprises, based on the weight of the organophosphate functionalized polymer, from 85 to 99.95 weight percent structural units of a monoethylenically unsaturated nonionic monomer and from 0.05 to 5 weight percent structural units of the polymerizable organic phosphate of Formula I or a salt thereof; wherein the polymeric composite microspheres have a solids content in the range of from 10 to 60 weight percent, based on the weight of the microspheres and water, an average particle size as measured by optical microscopy in the range of from 1 μm to 25 μm.

Preferably, the solids content is in the range of from 20, more preferably from 25, and most preferably from 30 weight percent, to 50, more preferably to 47 weight percent, based on the weight of the microspheres and water.

Preferably, the aqueous dispersion of polymeric composite microspheres comprises less than 1, more preferably less than 0.5, more preferably less than 0.2, and most preferably less than 0.1 weight percent gel, based on the weight of the composition, calculated as described in the Examples section. In another aspect, the polymeric microspheres are functionalized with an ammonium salt of the polymerizable organic phosphate, preferably at a concentration in the range from 0.2 to 2 weight percent, based on the weight of the microspheres.

The aqueous dispersion of composite microspheres is useful in coatings applications, especially where a matte finish is desired. Examples of such applications include leather, plastic packaging, wood, architectural coatings, metal, and glass coatings. The aqueous dispersion of composite microspheres may optionally include one or more additional components such as binders, thickeners, pigments, biocides, solvents, dispersants, coalescents, opaque polymers, and extenders. Examples of binders include polyacrylics, polystyrene-acrylics, polyurethanes, polyolefins, alkyds, and polyvinyl esters.

It has been discovered that the aqueous dispersion of composite microspheres achieve superior results over a non-composite aqueous blend of the polysiloxane and microspheres. The aqueous dispersion of the composite gives coatings with reduced coefficient of friction and without defects.

Method for measuring less than 5% gel formation

Pre-weighted sample (100 to 4,000 g) were poured through 150-μm screen then the screen was washed with copious amounts of water and gel was collected separately and dried at 150 °C for 30 min. The gel data is calculated as the weight ratio of the collected total dry gel in each screen over the total sample size:

$$\text{gel \%} = \text{dry gel/total sample} \times 100;\ \text{gel ppm} = \text{dry gel/total sample} \times 10^6$$

Method for measuring more than 5% gel formation

Pre-weighted sample (100 g) were poured through a 150-μm screen and the filtrate was collected separately, whereupon solids of the filtrate was measured. The gel data is calculated as difference between theoretical solid and filtrate solids where theoretical solids are calculated as follows:

$$\text{Theoretical solids \%} = \text{active ingredients/total amounts added to the batch} \times 100$$

$$\text{gel \%} = \text{theoretical solids\%} - \text{filtrate solids\%}$$

Optical Microscopy Particle Sizing Method

For particles having diameters in the range of from 1.0 μm to 25 μm, a diluted aqueous solution of composite microspheres was deposited on a standard glass microscope slide and a cover glass slip was placed on the wet sample, which were imaged with a Leitz Orthoplan Trinocular Microscope equipped with an Evolution VF Monochrome camera. Images were collected using a Zeiss 25X lens using Q-Capture software (version 2.9.13). Images were then processed using ImageJ software (version 1.50i, NIH, USA). The image scale in ImageJ was set as 5.45 pixel/μm (as determined previously from the image of a stage micrometer of known dimensions under the same imaging conditions). The diameters of a minimum of ten representative particles were measured manually using ImageJ's measure function. An average of the measurements was recorded to determine the average particle size.

Preparation of silicone dispersion 1

In a 2-L stainless steel beaker, Polystep A-16-22 sodium salt of a branched alkylbenzene sulfonic acid (A-16-22, 28.0 g, 22.0% aq.) was mixed with deionized water (176.5 g) using a Lightnin mixer until the surfactant was homogenously dispersed. DOWSIL™ Q1-3563 Polydimethyl Siloxane (PDMS, 1544.0 g, kinematic viscosity = 80 centistokes (cSt), measured at 25 °C, A Trademark The Dow Chemical Company or Its Affiliates) was fed over 15 min to the beaker while increasing the mixer speed for adequate mixing. At the end of the feed, more A-16-22 (28.0 g, 22.0% aq.) was added to the beaker, and the dispersion was mixed for 15 min at 1500 rpm. Additional deionized water (223.6 g) was added to the beaker with mixing. The silicone dispersion 1 was analyzed for percent solids (76.3%), and particle size (4.6 μm, as measured by Optical Microscopy).

Preparation of silicone dispersion 2

DOWSIL SFD-12 PDMS (225.0 g, kinematic viscosity = 4000 cSt measured at 25 °C), A-16-22 (8.1 g, 22.0% aq.) and deionized water (9.7 g) were added to a cup designed for a SpeedMixer DAC 600 FVZ mixer. The cup was capped and placed in the mixer and the contents mixed at 2350 rpm for 2 min. Additional deionized water (54.4 g) was added to the cup and the contents mixed in the mixer for additional 2 min. The silicone dispersion 2 was analyzed for percent solids (75.2 %), and particle size (3.6 μm, as measured by Optical Microscopy).

Preparation of silicone dispersion 3

DOWSIL 3-3602 PDMS (225.0 g, kinematic viscosity = 80,000 cSt measured at 25 °C), A-16-22 (8.1 g, 22.0% aq.) and deionized water (9.6 g) were added to a cup; the cup was capped and placed in the mixer and the contents mixed at 2350 rpm for 2 min. Additional deionized water (57.4 g) was added to the cup, which was then mixed in the mixer for additional 2 min. The silicone dispersion 3 was analyzed for percent solids (75.5 %), and particle size (4.6 μm, as measured by Optical Microscopy).

Example 1 - Preparation of Silicone-Acrylic Composite Microspheres using Silicone Dispersion 1

Initiator emulsion was prepared by combining in a vial deionized water (0.5 g), A-16-22 (0.7 g, 22.0% aq.), 4-hydroxy 2,2,6,6-tetramethylpiperidine (4-hydroxy TEMPO, 0.4 g, 5.0% aq.), t-amyl peroxy-2-ethylhexanoate (TAPEH, 5.4 g, 98% active), then agitating the mixture with a stir bar for 10 min. A shot monomer emulsion (shot ME) was prepared in a separate flask by combining deionized water (72.3 g), Solvay Sipomer PAM-600 phosphate esters of PPG monomethacrylate (PAM-600, 1.4 g, 60% aq.), A-16-22 (2.7 g, 22.0% solution), 4-hydroxy TEMPO (0.2 g, 5.0% aq.), n-butyl acrylate (BA, 165.7 g), and allyl methacrylate (ALMA, 6.9 g). Deionized water (580 g) was added to a 3-L round bottom flask (reactor) fitted with a stirrer, condenser, and a temperature probe. The reactor was heated to 78 °C; in the meantime the silicone dispersion 1 (103.1 g, 76.3% active) was diluted with deionized water (100 g) and mixed. When the reactor temperature reached 78 °C, the heater was turned off; a cup containing diluted silicone dispersion 1 was then added to the reactor; the cup was rinsed with deionized water (100 g), after which time shot ME was fed into the reactor over 15 min. One hour later, with the reactor temperature at 66 °C, the initiator emulsion was added to the reactor. After an induction period of 62 min, the resultant exotherm caused the reactor temperature to rise to 83 °C. The particle size of the microspheres formed in this step as measured by Optical Microscopy was measured to be 8.1 μm.

A first monomer emulsion (ME1), prepared by combining deionized water (189.7 g), PAM-600 (3.8 g, 60 % aq.), A-16-22 (7.1 g, 22.0% aq.), 4-hydroxy TEMPO (0.6 g, 5.0 % aq.), BA (434.7 g), and ALMA (18.1 g) was then fed into the reactor over 30 min while maintaining the reactor temperature at 81°C. Remaining residual monomers were chased by raising the reactor temperature to 95 °C and maintaining reactor temperature for 60 min. Reactor was then cooled to ambient temperature and the consequent dispersion was filtered through a 150-μm screen; gel that remained on the screen was collected and dried (109 ppm). The filtrate was analyzed for percent solids (38.8%), and particle size (10.3 μm, as measured by Optical Microscopy), and the final silicone level was 11.2 weight percent based on total solids.

Example 2 - Preparation of an Aqueous Dispersion of Silicone-Acrylic Composite Microspheres using Silicone Dispersion 1 with PAM-600 only in ME1

The process of was carried out essentially as described for Example 1 except that there was no PAM-600 in shot ME. The particle size of the microspheres was 8.5 μm following the shot ME polymerization step and 11.1 μm following the ME1 polymerization step as measured by Optical Microscopy. After the ME1 polymerization step and 150-μm filtration, the percent solids of the filtrate was 38.1% and gel formation was 556 ppm. The final silicone level was 11.2 weight percent based on total solids.

Example 3 - Preparation of an Aqueous Dispersion of Silicone-Acrylic Composite Microspheres using Silicone Dispersion 2 with PAM-600 in all Stages

The process of was carried out essentially as described for Example 1 except that silicone dispersion 2 (104.5 g, 75.2% active) was used. The particle size of the microspheres was 6.0 μm following the shot ME polymerization step and 9.0 μm following the ME1 polymerization step as measured by Optical Microscopy. After the ME1 polymerization step and 150-μm filtration, the percent solids of the filtrate was 37.7% and gel formation was 288 ppm. The final silicone level was 11.2 weight percent based on total solids.

Example 4 - Preparation of an Aqueous Dispersion of Silicone-Acrylic Composite Microspheres using Silicone Dispersion 3 with PAM-600 in all Stages

The process of was carried out essentially as described for Example 1 except that silicone dispersion 3 (104.1 g, 75.5% active) was used. The particle size of the microspheres was 7.8 μm following the shot ME polymerization step and 11.0 μm following the ME1 polymerization step as measured by Optical Microscopy. After the ME1 polymerization step and 150-μm filtration, the percent solids was 38.5% and gel formation was 583 ppm. The final silicone level was 11.2 weight percent based on total solids.

Example 5 - Preparation of an Aqueous Dispersion of Silicone-Acrylic Composite Microspheres using Silicone Dispersion 1 with PAM-600 in all Stages in a Multi-stage process

The process of was carried out essentially as described for Example 1 except that a second monomer emulsion (ME2, described below) was polymerized upon completion of ME1 polymerization. A 20-min hold after ME1 feed with reactor temperature at 82 °C, $NH_4OH$ (0.6 g, 28% aq.) was fed into the reactor over 3 min. The particle size of the microspheres formed after shot ME and ME1 step as measured by Optical Microscopy were 8.1 μm and 10.3 μm, respectively.

The reactor temperature was cooled to and maintained at 75 °C, after which time $FeSO_4 \cdot 7H_2O$ (7.4 g, 0.15% aq.) and EDTA tetrasodium salt (1.4 g, 1% aq.) were mixed and added to reactor. A second monomer emulsion (ME2) was prepared in a separate flask by combining deionized water (60 g), A-16-22 (2.2 g, 22.0% aq.), PAM-600 (1.6 g, 60% aq.), methyl methacrylate (MMA, 176 g). ME2, t-butyl hydroperoxide solution (t-BHP, 1.0 g (70% aq.) in 19 g water) and isoascorbic acid (IAA, 0.7 g in 20 g water) was fed into the reactor over 45 min. The residual monomers were then chased by feeding *t*-BHP solution (1.7 g (70% aq.) in 33 g water) and IAA (0.9 g in 33 g water) into the reactor over 20 min. The consequent dispersion was filtered through a 150-μm screen; gel that remained on the screen was collected and dried (3961 ppm). The filtrate was analyzed for percent solids (38.7%) and particle size (10.7 μm, as measured by Optical Microscopy). The final silicone level was 8.8 weight percent based on total solids.

Example 6 - Preparation of an Aqueous Dispersion of Silicone-Acrylic Composite Microspheres using *in-situ* Silicone-acrylate Shot ME with PAM-600 in all Stages

Initiator emulsion was prepared by combining in a separate vial deionized water (0.5 g), A-16-22 (0.7 g, 22.0% aq.), 4-hydroxy TEMPO (0.4 g, 5.0% aq.), TAPEH (5.4 g, 98% active), then agitating the mixture with a stir bar for 10 minutes. A shot monomer emulsion (shot ME) was prepared in a separate flask by combining deionized water (109.5 g), PAM-600 (2.1 g, 60% aq.), A-16-22 (4.1 g, 22.0% aq.), 4-hydroxy TEMPO (0.2 g, 5.0% aq.), *n*-butyl acrylate (BA, 173.2 g), allyl methacrylate (ALMA, 7.2 g) and Xiameter PMX-200 fluid (82.0 g with capillary viscosity of 20 cSt measured at at 25 °C). Deionized water (800 g) was added to a 3-L round bottom flask (reactor) fitted with a stirrer, condenser, and a temperature probe and then heated to 71°C. Once reactor temperature at heated to 71 °C, shot ME was fed into the reactor over 15 min through Silverson high shear in-line-mixer running at 2000 rpm mixing speed. Subsequently, reactor at 63 °C the initiator emulsion is added to the reactor. After an induction period of 50 min, the resultant exotherm caused the reactor temperature to rise to 83 °C. The particle size of the microspheres formed in this step as measured by Optical Microscopy was 9.3 μm.

A first monomer emulsion (ME1), prepared by combining deionized water (238.0 g), PAM-600 (3.8 g, 60% aq.), A-16-22 (7.4 g, 22.0% aq.), 4-hydroxy TEMPO (0.6 g, 5.0 % aq.), BA (453.6 g), and ALMA (19.0 g) was then fed into the reactor over 30 min while maintaining reactor temperature at 81°C. Remaining residual monomers was chased by raising reactor temperature to 95 °C and maintaining reactor temperature for 60 minutes. Reactor was then cooled to ambient temperature and the consequent dispersion was filtered through a 150-μm screen; gel that remained on the screen was collected and dried (234 ppm). The filtrate was analyzed for percent solids (37.4%), and particle size (12.2 μm, as measured by Optical Microscopy). The final silicone level was 11.2 weight percent based on total solids.

Example 7 - Preparation of an Aqueous Dispersion of Silicone-Acrylic Composite Microspheres using Silicone Dispersion 1 with PAM-600 in all Stages

Initiator emulsion was prepared by combining in a separate vial deionized water (0.7 g), A-16-22 (0.9 g, 22.0% aq.), 4-hydroxy TEMPO (0.5 g, 5.0% aq.), TAPEH (7.0 g, 98% active), then agitating the mixture with a stir bar for 10 minutes. A shot monomer emulsion (shot ME) was prepared in a separate flask by combining deionized water (144.6 g), PAM-600 (2.9 g, 60% aq.), A-16-22 (5.4 g, 22.0% solution), 4-hydroxy TEMPO (0.4 g, 5.0% aq.), n-butyl acrylate (BA, 331.4 g), and allyl methacrylate (ALMA, 13.8 g). Deionized water (1485 g) was added to a 5-L round bottom flask (reactor) fitted with a stirrer, condenser, and a temperature probe. The reactor was heated to 78 °C, in the meantime the silicone dispersion 1 (70.0 g, 76.3% active) was diluted with deionized water (100 g) and mixed. Once reactor temperature at heated to 78 °C, diluted silicone seed is added to the reactor and rinsed with deionized water (100 g) then shot ME was fed into the reactor over 15 min. One hour afterwards and reactor at 66 °C, the initiator emulsion is added to the reactor and rinsed with deionized water (35 g). After an induction period of 62 min, the resultant exotherm caused the reactor temperature to rise to 83 °C. The particle size of the microspheres formed in this step as measured by Optical Microscopy was 8.9 μm.

A first monomer emulsion (ME1), prepared by combining deionized water (379.4 g), PAM-600 (7.6 g, 60% aq.), A-16-22 (14.3 g, 22.0% aq.), 4-hydroxy TEMPO (1.2 g, 5.0% aq.), BA (869.5 g), and ALMA (36.3 g) was then fed into the reactor over 45 min while maintaining reactor temperature at 81°C then and ME1 flask was rinsed with deionized water (80 g). Remaining residual monomers was chased by raising reactor temperature to 95 °C and maintaining reactor temperature for 60 minutes. Reactor was then cooled to ambient temperature and the consequent dispersion was filtered through a 150-μm screen; gel that remained on the screen was collected and dried (542 ppm). The filtrate was analyzed for percent solids (35.8%), and particle size (12.6 μm, as measured by Optical Microscopy). The final silicone level was 4.1 weight percent based on total solids.

Example 8 - Preparation of an Aqueous Dispersion of Silicone-Acrylic Composite Microspheres using Silicone Dispersion 1 with PAM-600 in all Stages

The process of was carried out essentially as described for Example 7 except that silicone dispersion 1 (35.0 g, 76.3% active) was used. The particle size of the microspheres was 9.7 μm following the shot ME polymerization step and 13.6 μm following the ME1 polymerization step as measured by Optical Microscopy. After the ME1 polymerization step and 150-μm filtration, the percent solids was 35.7% and gel formation was 3394 ppm. The final silicone level was 2.1 weight percent based on total solids.

Example 9 - Preparation of an Aqueous Dispersion of Silicone-Acrylic Composite Microspheres using Silicone Dispersion 1 with PM-21 only in ME1

The process of was carried out essentially as described for Example 1 except that Kayamer PM-21 phosphate ester (PM-21) was used in place of PAM-600 at the following amounts: PM-21 (0.9 g, 98% active) in shot ME and PM-21 (2.3 g) in ME1. The particle size of the microspheres was 8.4 μm following the shot ME polymerization step and 12.3 μm following the ME1 polymerization step as measured by Optical Microscopy. After the ME1 polymerization step and 150-μm filtration, the percent solids of the filtrate was 37.9 % and gel formation was 1029 ppm. The final silicone level was 11.2 weight percent based on total solids.

Example 10 - Preparation of an Aqueous Dispersion of Silicone-Acrylic Composite Microspheres using Silicone Dispersion 1 with PAM-100 only in ME1

The process of was carried out essentially as described for Example 1 except that Solvay Sipomer PAM-100 phosphate esters of PEG monomethacrylate (PAM-100) was used in place of PAM-600 at the following amounts: PAM-100 (0.9 g, 98 % active) in the shot ME and PAM-100 (2.3 g) in ME1. The particle size of the microspheres was 8.3 μm following the shot ME polymerization step and 10.7 μm following the ME1 polymerization step as measured by Optical Microscopy. After the ME1 polymerization step and 150-μm filtration, the percent solids of the filtrate was 37.9% and gel formation was 250 ppm. The final silicone level was 11.2 weight percent based on total solids.

Example 11 - Preparation of an Aqueous Dispersion of Silicone-Acrylic Composite Microspheres using Silicone Dispersion 1 with PAM-200 in all Stages

Initiator emulsion was prepared by combining in a separate vial deionized water (0.5 g), A-16-22 (0.7 g, 22.0% aq.), 4-hydroxy TEMPO (0.4 g, 5.0% aq.), TAPEH (5.4 g, 98% active), then agitating the mixture with a stir bar for 10

minutes. A shot monomer emulsion (shot ME) was prepared in a separate flask by combining deionized water (50.6 g), Solvay Sipomer PAM-200 phosphate esters of PPG monomethacrylate (PAM-200, 0.6 g, 98% active), A-16-22 (1.9 g, 22.0% solution), 4-hydroxy TEMPO (0.2 g, 5.0% aq.), BA (115.9 g), and ALMA (4.8 g). Deionized water (400 g) was added to a 3-L round bottom flask (reactor) fitted with a stirrer, condenser, and a temperature probe. The reactor was heated to 78 °C, in the meantime the silicone dispersion 1 (72.2 g, 76.3% active) was diluted with deionized water (40 g) and mixed. Once reactor temperature at heated to 78 °C, diluted silicone seed is added to the reactor and rinsed with deionized water (40 g) then shot ME was fed into the reactor over 8 min. One hour afterwards and reactor at 63 °C, the initiator emulsion is added to the reactor. After an induction period of 49 min, the resultant exotherm caused the reactor temperature to rise to 83 °C. The particle size of the microspheres formed in this step as measured by Optical Microscopy was 8.1 μm.

A first monomer emulsion (ME1), prepared by combining deionized water (211.4 g), PAM-200 (2.6 g, 98% active), A-16-22 (7.9 g, 22.0% aq.), 4-hydroxy TEMPO (0.6 g, 5.0% aq.), $NH_4OH$ (2.5 g, 6.0% aq.), BA (484.6 g), and ALMA (20.2 g) was then fed into the reactor over 45 min while maintaining reactor temperature at 82°C. Remaining residual monomers was chased by raising reactor temperature to 95 °C and maintaining reactor temperature for 60 minutes. Reactor was then cooled to ambient temperature and the consequent dispersion was filtered through a 150-μm screen; gel that remained on the screen was collected and dried (1700 ppm). The filtrate was analyzed for percent solids (45.5%), and particle size (12.3 μm, as measured by Optical Microscopy). The final silicone level was 8.1 weight percent based on total solids.

Comparative Example 1 - Preparation of an Aqueous Dispersion of Silicone-Acrylic

Composite Microspheres using Silicone Dispersion 1 without reactive phosphate surfactants in any stages.

The process of was carried out essentially as described for Example 7 except that there was no PAM-600 in any stages. The particle size of the microspheres was 8.9 μm following the shot ME polymerization step as measured by Optical Microscopy. After the ME1 polymerization step and 150-μm filtration, the percent solids was 4.0 % and gel formation was 31.6% (theoretical solids are 35.6%). Particle size could not be measured because most of the material formed gel. The final silicone level was 4.1 weight percent based on total solids.

Comparative Intermediate Example 1 - Preparation of an Aqueous Dispersion of non-Composite Acrylic Microspheres

Initiator emulsion was prepared by combining in a separate vial deionized water (4.9 g), A-16-22 (0.2 g, 22.0% aq.), 4-hydroxy TEMPO (0.4 g, 5.0% aq.), t-butyl peroxy-2-ethylhexanoate (TBPEH, 5.4 g, 98% active), then emulsified for 10 min with a homogenizer at 15,000 rpm. The initiator emulsion was then added to the dispersion of the acrylic oligomer seed (4.2 g, 32.2% solids), which was prepared substantially as described in US 8,686,096, Examples 1 and 5 (col. 19 and 20), in a separate vial and mixed for 30 min. A shot ME was prepared in a separate flask by combining deionized water (109.6 g), A-16-22 (4.1 g, 22.0% solution), 4-hydroxy TEMPO (0.2 g, 5.0% aq.), PAM-600 (2.1 g, 60% aq.), BA (251.6 g), and ALMA (10.6 g). Deionized water (1575 g) was added to a 5-L round bottom flask (reactor) fitted with a stirrer, condenser, and a temperature probe. The reactor was heated to 70 °C, after which time the initiator and oligomer seed mixture was added to the reactor, and shot ME was fed into the reactor over 15 min. After an induction period of 30 min, the resultant exotherm caused the reactor temperature to rise to 80 °C.

ME1, which was prepared by combining deionized water (438.4 g), A-16-22 (16.5 g, 22.0 % solution), 4-hydroxy TEMPO (0.8 g, 5.0% aq.), PAM-600 (8.4 g, 60% aq.), BA (1006.4 g), and ALMA (42.4 g), was then fed into the reactor over 75 min while maintaining reactor temperature at 80 °C. Following the 20 min hold after end of the ME1 feed, residual monomers were polymerized by raising the reactor temperature to 92 °C and holding for 30 min. Reactor was then cooled to ambient temperature and the consequent dispersion was filtered through a 150-μm screen. The filtrate was analyzed for percent solids (36.4%), and particle size (8.0 μm, as measured by Optical Microscopy).

Coating preparation method

Drawdowns were made with an adjustable gap blade set to 7-mil thickness. The substrate was glass for coefficient of friction measurements, and black Leneta charts for gloss measurements.

Gloss measurement method

Gloss was measured using a BYK micro-TRI-gloss meter to measure 60° and 85° gloss. The measurements are taken at 5 different spots along the drawdown, and averaged to obtain the final reading.

Kinetic coefficient of friction (COF) measurement method

The measured force was obtained from a tribometer system that applies 50, 125, and 250 g of force using 3/8" diameter nylon balls. The balls were pulled along the coated glass substrate for 1 cm 10 times, in three different spots for each applied normal force. The measured force was then averaged from these three spots. Kinetic COF was calculated as the slope of the normal force (x-axis) versus measured force (y-axis) as described by Kalihari et al. in Rev. Sci. Instrum. 84, 035104 (2013).

Coating quality evaluation method

Drawdowns on a black and white Leneta chart were prepared by hand using 3-mL thickness steel drawdown bar. The coating was dried at 150 °C for 2 min. Samples were examined visually both in their wet and dry state for large visible craters in the film.

Coating Example 1 - Preparation of a Coating Formulation and Application

The dispersion of composite microspheres from example 3 (62.4 g, 37.7 % solids) was placed in a 200-mL size plastic container, which was then secured and placed under overheard stirrer. While mixing, a 2-stage acrylic binder - 80(96.5 ethyl acrylate/3.5 acrylic acid)//20(methyl methacrylate, as disclosed in US 7,829,626 (82.8 g, 34.7% solids), dilution water (20.8 g) and $NH_4OH$ (1.6 g, 10% aq.) were added the container. As a last step, 3-times diluted ACRYSOL™ ASE-60 Thickener (ASE-60, A Trademark of The Dow Chemical Company or its Affiliates, 12.4 g, 9.3% active) was slowly added to the container as the viscosity of the mixture is increased while agitation is adjusted accordingly for adequate mixing. The sample was coated on a glass substrate and dried; kinetic COF was measured to be 0.04, with coefficient of determination ($R^2$) = 0.95 for the fitting. The sample was also coated on black Leneta paper and dried; gloss at 60° and 85° were measured to be 8.6 and 3.1 respectively. A hand drawdown sample had no craters in both the wet and dry states of the film.

Coating Example 2 - Preparation of a Coating Formulation and Application

The formulation was prepared as described in Coating Example 1 except for the dispersion of composite microspheres from example 4 (62.0 g, 38.5% solids) was used, and the amount of dilution water was 21.2 g. The kinetic COF was measured to be 0.03 with $R^2$ = 1.00 for the fitting. The sample was also coated on a black Leneta paper substrate and gloss at 60° and 85° were measured to be 3.1 and 2.1 respectively. A hand drawdown sample showed no craters in both wet and dry states of the film.

Comparative Coating Example 1 - Preparation of Coating formulation and Application using non-Composite Microspheres

The formulation was prepared as described in Coating Example 1 except that instead of using the composite of Example 3, the non-composite dispersion of Intermediate Comparative Example 1 (64.6 g, 36.4 % solids) was used, and the amount of dilution water was 18.6 g. The kinetic COF was measured to be 0.12 with $R^2$ = 0.98 for the fitting. The sample was also coated on a black Leneta paper substrate and gloss at 60° and 85° were measured to be 3.9 and 2.7 respectively. A hand drawdown sample had no craters in both wet and dry state of the film.

Comparative Coating Example 2 - Preparation of Coating Formulation and Application using Silicone Dispersion and non-Composite Microspheres

The formulation was prepared as described in Comparative Example 1 except that the amount of Intermediate Comparative Example 1 was 57.4 g; and silicone dispersion 2 (3.5 g, 75.2 % active) was added to the plastic container after addition of the dispersion of Comparative Intermediate Example 1. The amount of dilution water was 22.3 g. The kinetic COF was measured to be 0.05, with $R^2$ = 1.00 for the fitting. The sample was also coated on a black Leneta paper substrate and gloss at 60° and 85° were measured to be 4.6 and 3.3 respectively. A hand drawdown sample showed many large visible craters in both the wet and dry state of the film.

Comparative coating example 3 - Preparation of Coating Formulation and Application using Silicone Dispersion and non-Composite Microspheres

The formulation was prepared as described in Comparative Example 2 except that silicone dispersion 3 was used instead of silicon dispersion 2. The kinetic COF was measured to be 0.03, with $R^2$ = 1.00 for the fitting. The sample

was also coated on a black Leneta paper substrate and gloss at 60° and 85° were measured to be 4.5 and 3.1 respectively. A hand drawdown sample showed many large visible craters in both the wet and dry state of the film.

Table 1 illustrates the criticality of the composite on coefficient of friction, gloss, and film integrity. Coat Ex refers to the coating example; C. Ex refers to comparative coating example. Dilution water was adjusted to give a total formulation amount of 180 g.

Table 1 - Comparison of Coatings with and without Polymeric Composite Microspheres

| Coating Component (% active) | Coat Ex 1 | Coat Ex 2 | C. Ex 1 | C. Ex 2 | C. Ex 3 |
|---|---|---|---|---|---|
| Ex. 3 (37.7%) | 62.4 g | | | | |
| Ex. 4 (38.5%) | | 62.0 g | | | |
| Comp. Int Ex. 1 (36.4%) | | | 64.6 g | 57.4 g | 57.4 g |
| Silicone dispersion 2 (75.2%) | | | | 3.5 g | |
| Silicone dispersion 3 (75.5%) | | | | | 3.5 g |
| Dilution Water | 20.8 g | 21.2 g | 18.6 g | 22.3 g | 22.3 g |
| Properties | | | | | |
| Coefficient of Friction Kinetic | 0.04 | 0.03 | 0.12 | 0.05 | 0.03 |
| $R^2$ for Coefficient of Friction | 0.95 | 1.00 | 0.98 | 1.00 | 1.00 |
| Gloss at 85° | 8.6 | 3.1 | 3.9 | 4.6 | 4.5 |
| Gloss at 60° | 3.1 | 2.1 | 2.7 | 3.3 | 3.1 |
| Craters in the film? | N | N | N | Y | Y |

The data show that the dispersion of the composite microspheres (Coating Examples 1 and 2) exhibit defect free coatings (no craters) as compared with compositions that contain dispersions of organic microspheres and polysiloxanes not in composite form (Comparative Coating Examples 2 and 3). Moreover, the coefficient of friction for Coating Examples 1 and 2 is superior to the composition that just contains the dispersion of non-composite acrylic microspheres. Thus, whereas the presence of composite microspheres comprising both the acrylic polymer and the polysiloxane provides defect free coatings, free polysiloxanes without the protection of the microsphere exacerbates the formation of defects in the coating. Compositions that contain microspheres but no polysiloxane, either free or as part of a composite, form coatings that are defect free but exhibit a high coefficient of friction. Finally, the presence of polysiloxane in the composite does not adversely impact gloss at 60° and 85°.

## Claims

**1.** A process for preparing an aqueous dispersion of organic phosphate functionalized composite microspheres comprising the step of contacting, under polymerization conditions, an aqueous dispersion of first composite microspheres comprising a polysiloxane and structural units of a first monoethylenically unsaturated nonionic monomer with first stage monomers comprising, based on the weight of the first stage monomers, from a) 0.05 to 5 weight percent of a polymerizable organic phosphate or a salt thereof; and b) from 85 to 99.95 weight percent of a second monoethylenically unsaturated nonionic monomer, to grow out the first composite microspheres to form an aqueous dispersion of organic phosphate functionalized second composite microspheres, wherein the first composite microspheres have an average particle size in the range of from 1 μm to 15 μm and the second composite microspheres have an average particle size in the range of from 1.1 μm and 25 μm; and wherein the polymerizable organic phosphate is represented by Formula I:

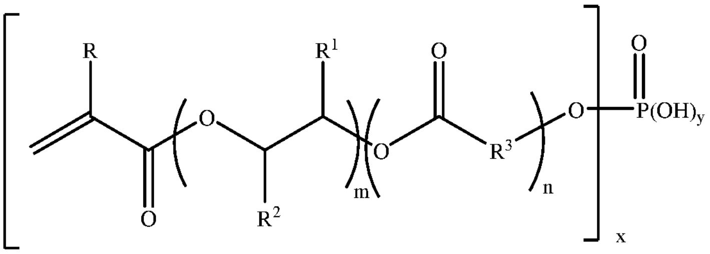

I

;

or a salt thereof; wherein R is H or $CH_3$, wherein $R^1$ and $R^2$ are each independently H or $CH_3$, with the proviso that no two adjacent $CR^2CR^1$ groups are each substituted with methyl groups; each $R^3$ is independently linear or branched $C_2$-$C_6$ alkylene; m is from 1 to 10 and n is from 0 to 5, with the proviso that when m is 1, n is 1 to 5; x is 1 or 2; and y is 1 or 2; and x + y = 3.

**2.** The process of Claim 1 wherein the polysiloxane is represented by Formula IV:

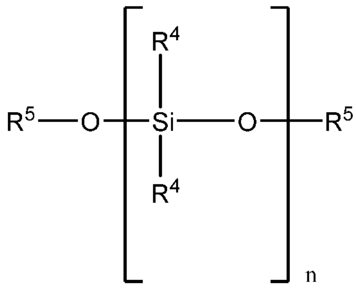

IV

wherein each $R^4$ is independently $C_1$-$C_{30}$-alkyl, O-$C_1$-$C_6$-alkyl, or H, with the proviso that at least one $R^4$ is $C_1$-$C_{30}$-alkyl; each $R^5$ is independently $C_1$-$C_{30}$-alkyl, H, or $Si(R^6)_3$; wherein each $R^6$ is independently $C_1$-$C_6$-alkyl; and n is from 4 to 10,000.

**3.** The process of Claim 2 wherein each $R^4$ is methyl.

**4.** The process of Claim 2 wherein the second microspheres have a particle size in the range of from 1.5 μm to 20 μm; and wherein the organic phosphate monomer is represented by

a) the compound of formula II:

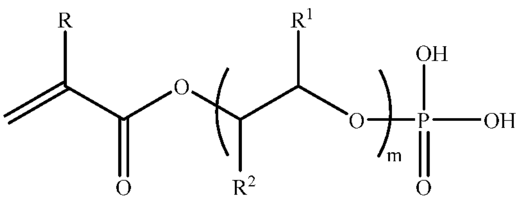

II

;

or a salt thereof; wherein m is from 3 to 8; or

b) the compound of formula III:

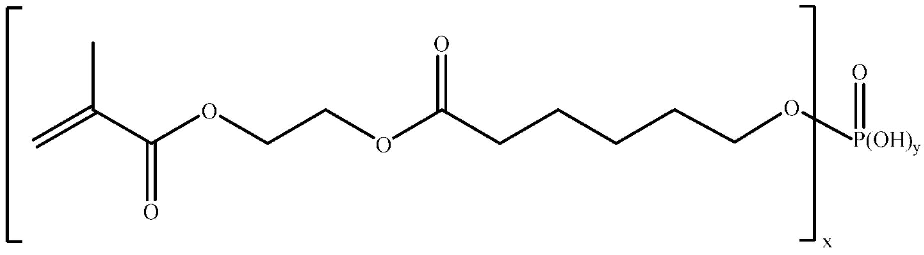

III

5. The process of Claim 4 wherein the first stage monomers further comprise from 0.1 to 14.95 weight percent, based on the weight of first stage monomers, of a multiethylenically unsaturated nonionic monomer.

6. The process of Claim 2 wherein the first composite microspheres are prepared by contacting under polymerization conditions an aqueous dispersion of a polysiloxane and a first monoethylenically unsaturated monomer.

7. The process of Claim 5 wherein the dispersion of organic phosphate functionalized second composite microspheres is further reacted with a second stage monoethylenically unsaturated nonionic monomer, in the presence of a water-soluble initiator/redox couple.

8. The process of Claim 1 which further comprises the step of contacting the aqueous dispersion of organic phosphate functionalized composite microspheres with one or more components selected from the group consisting of binders, thickeners, pigments, biocides, solvents, dispersants, coalescents, opaque polymers, and extenders.

9. A composition comprising an aqueous dispersion of polymeric composite microspheres comprising from 0.3 to 70 weight percent of a polysiloxane and from 30 to 99.7 weight percent an organophosphate functionalized polymer, wherein the organophosphate functionalized polymer comprises, based on the weight of the organophosphate polymer, from 85 to 99.9 weight percent structural units of a monoethylenically unsaturated nonionic monomer and from 0.05 to 5 weight percent structural units of a polymerizable organic phosphate or a salt thereof, which is represented by the compound of Formula I:

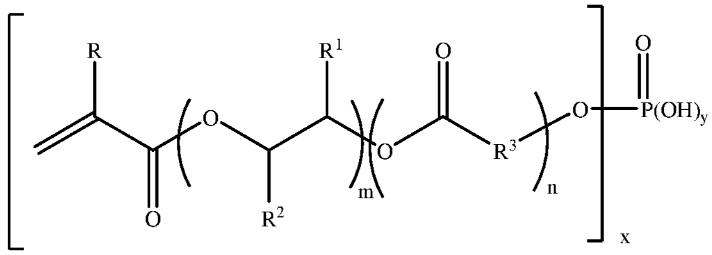

I

or a salt thereof; wherein R is H or $CH_3$, wherein $R^1$ and $R^2$ are each independently H or $CH_3$, with the proviso that no two adjacent $CR^2CR^1$ groups are each substituted with methyl groups; each $R^3$ is independently linear or branched $C_2$-$C_6$ alkylene; m is from 1 to 10 and n is from 0 to 5, with the proviso that when m is 1, n is 1 to 5; x is 1 or 2; and y is 1 or 2; and x + y = 3; wherein the polymeric microspheres have a solids content in the range of from 10 to 60 weight percent, based on the weight of the microspheres and water; wherein the polymeric microspheres have an average particle size in the range of from 1 μm to 25 μm.

10. The composition of Claim 9 wherein the polysiloxane is represented by Formula IV:

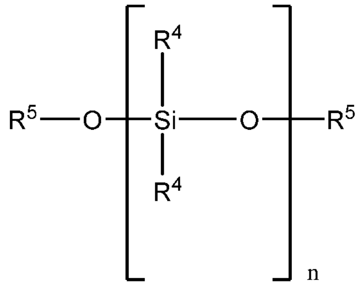

IV

wherein each $R^4$ is independently $C_1$-$C_{30}$-alkyl, O-$C_1$-$C_6$-alkyl, or H, with the proviso that at least one $R^4$ is $C_1$-$C_{30}$-alkyl; each $R^5$ is independently $C_1$-$C_{30}$-alkyl, H, or $Si(R^6)_3$; wherein each $R^6$ is independently $C_1$-$C_6$-alkyl; and n is from 4 to 10,000.

**11.** The composition of Claim 10 where each $R^4$ is methyl; n is from 10 to 5000; and each $R^5$ is H.

**12.** The composition of Claim 10 wherein the polymeric composite microspheres have an average particle size in the range of from 1.5 μm to 15 μm; wherein the polymeric composite microspheres further comprise from 1 to 10 weight percent structural units of a multiethylenically unsaturated nonionic monomer, based on the weight of the organophosphate functionalized polymer; and wherein the polymerizable organic phosphate or a salt thereof represented by Formula II:

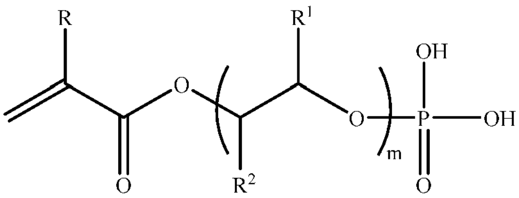

II ;

or a salt thereof; wherein m is from 3 to 8; or
b) the compound of formula III:

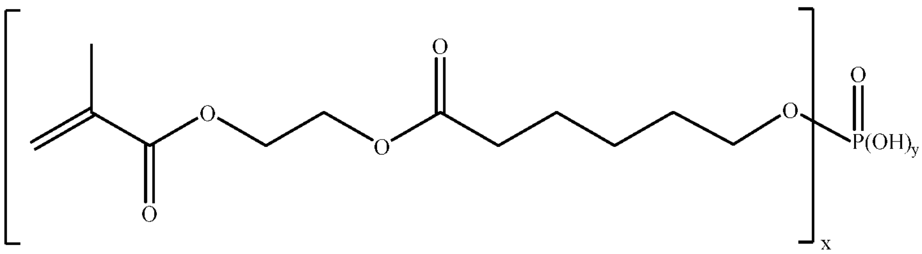

III.

**Patentansprüche**

**1.** Verfahren zum Herstellen einer wässrigen Dispersion von organischen phosphatfunktionalisierten Kompositmikrokügelchen, umfassend den Schritt eines Inkontaktbringens, unter Polymerisationsbedingungen, einer wässrigen Dispersion von ersten Kompositmikrokügelchen, umfassend ein Polysiloxan und Struktureinheiten eines ersten monoethylenisch ungesättigten nichtionischen Monomers, mit Monomeren der ersten Stufe, umfassend, bezogen auf das Gewicht der Monomere der ersten Stufe, zu a) 0,05 bis 5 Gewichtsprozent ein polymerisierbares organisches Phosphat oder ein Salz davon; und b) zu 85 bis 99,95 Gewichtsprozent ein zweites monoethylenisch ungesättigtes

nichtionisches Monomer, um die ersten Kompositmikrokügelchen auswachsen zu lassen, um eine wässrige Dispersion von organischen phosphatfunktionalisierten zweiten Kompositmikrokügelchen zu bilden, wobei die ersten Kompositmikrokügelchen eine durchschnittliche Teilchengröße in dem Bereich von 1 µm bis 15 µm aufweisen und die zweiten Kompositmikrokügelchen eine durchschnittliche Teilchengröße in dem Bereich von 1,1 µm und 25 µm aufweisen; und wobei das polymerisierbare organische Phosphat durch Formel I dargestellt wird:

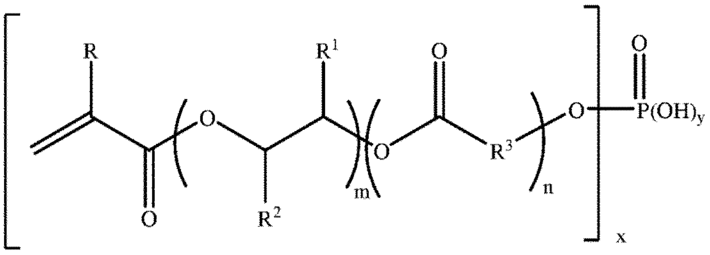

I

;

oder ein Salz davon; wobei R H oder $CH_3$ ist, wobei $R^1$ und $R^2$ jeweils unabhängig H oder $CH_3$ sind, mit der Maßgabe, dass keine zwei benachbarten $CR^2CR^1$-Gruppen jeweils mit Methylgruppen substituiert sind; jedes $R^3$ unabhängig lineares oder verzweigtes $C_2$-$C_6$-Alkylen ist; m von 1 bis 10 ist und n 0 bis 5 ist, mit der Maßgabe, dass, wenn m 1 ist, n 1 bis 5 ist; x 1 oder 2 ist; und y 1 oder 2 ist; und x + y = 3.

**2.** Verfahren nach Anspruch 1, wobei das Polysiloxan durch Formel IV dargestellt wird:

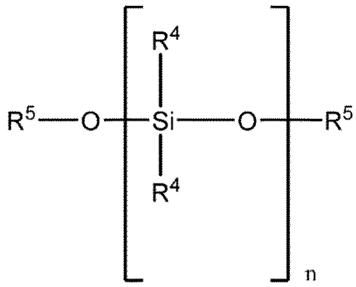

IV

wobei jedes $R^4$ unabhängig $C_1$-$C_{30}$-Alkyl, O-$C_1$-$C_6$-Alkyl oder H ist, mit der Maßgabe, dass mindestens ein $R^4$ $C_1$-$C_{30}$-Alkyl ist; jedes $R^5$ unabhängig $C_1$-$C_{30}$-Alkyl, H oder $Si(R^6)_3$ ist; wobei jedes $R_6$ unabhängig $C_1$-$C_6$-Alkyl ist; und n von 4 bis 10.000 ist.

**3.** Verfahren nach Anspruch 2, wobei jedes $R^4$ Methyl ist.

**4.** Verfahren nach Anspruch 2, wobei die zweiten Mikrokügelchen eine Teilchengröße in dem Bereich von 1,5 µm bis 20 µm aufweisen; und wobei das organische Phosphatmonomer dargestellt wird durch

a) die Verbindung der Formel II:

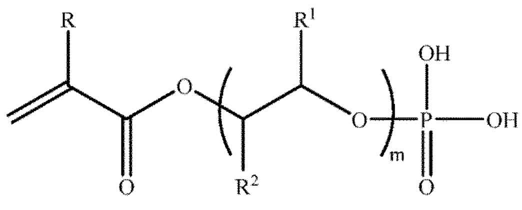

II

;

oder ein Salz davon; wobei m von 3 bis 8 ist; oder
b) die Verbindung der Formel III:

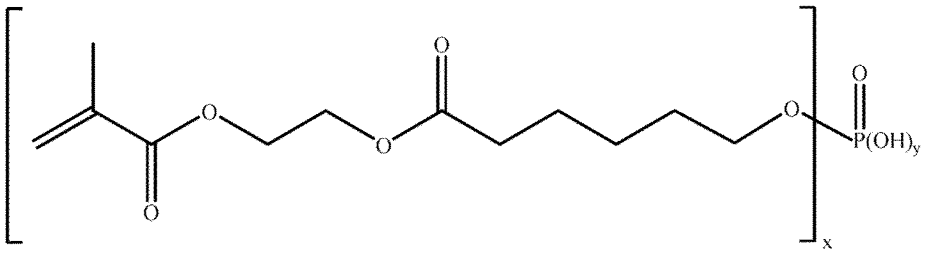

III .

5. Verfahren nach Anspruch 4, wobei die Monomere der ersten Stufe ferner zu 0,1 bis 14,95 Gewichtsprozent, bezogen auf das Gewicht der Monomere der ersten Stufe, ein mehrfach ethylenisch ungesättigtes nichtionisches Monomer umfassen.

6. Verfahren nach Anspruch 2, wobei die ersten Kompositmikrokügelchen durch Inkontaktbringen, unter Polymerisationsbedingungen, einer wässrigen Dispersion eines Polysiloxans und eines ersten monoethylenisch ungesättigten Monomers hergestellt werden.

7. Verfahren nach Anspruch 5, wobei die Dispersion von organischen phosphatfunktionalisierten zweiten Kompositmikrokügelchen ferner mit einem monoethylenisch ungesättigten nichtionischen Monomer der zweiten Stufe, in der Gegenwart eines wasserlöslichen Initiator/Redox-Paares, umgesetzt wird.

8. Verfahren nach Anspruch 1, das ferner den Schritt des Inkontaktbringens der wässrigen Dispersion von organischen phosphatfunktionalisierten Kompositmikrokügelchen mit einer oder mehreren Komponenten, die aus der Gruppe ausgewählt sind, bestehend aus Bindemitteln, Verdickungsmitteln, Pigmenten, Bioziden, Lösungsmitteln, Dispergiermitteln, Koaleszenzmitteln, lichtundurchlässigen Polymeren und Streckmitteln, umfasst.

9. Zusammensetzung, umfassend eine wässrige Dispersion von polymeren Kompositmikrokügelchen, umfassend zu 0,3 bis 70 Gewichtsprozent ein Polysiloxan und zu 30 bis 99,7 Gewichtsprozent ein organophosphatfunktionalisiertes Polymer, wobei das organophosphatfunktionalisierte Polymer, bezogen auf das Gewicht des Organophosphatpolymers, zu 85 bis 99,9 Gewichtsprozent Struktureinheiten eines monoethylenisch ungesättigten nichtionischen Monomers und zu 0,05 bis 5 Gewichtsprozent Struktureinheiten eines polymerisierbaren organischen Phosphats oder ein Salz davon umfasst, das durch die Verbindung der Formel I dargestellt wird:

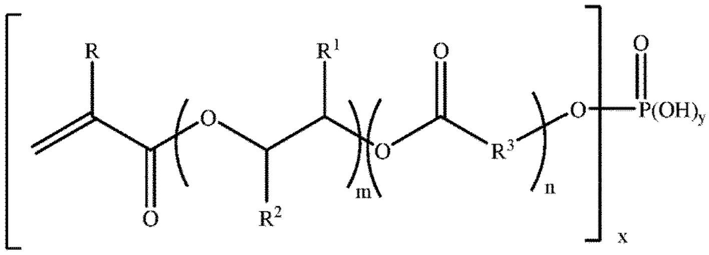

I

oder ein Salz davon; wobei R H oder $CH_3$ ist, wobei $R^1$ und $R^2$ jeweils unabhängig H oder $CH_3$ sind, mit der Maßgabe, dass keine zwei benachbarten $CR^2CR^1$-Gruppen jeweils mit Methylgruppen substituiert sind; jedes $R^3$ unabhängig lineares oder verzweigtes $C_2$-$C_6$-Alkylen ist; m von 1 bis 10 ist und n 0 bis 5 ist, mit der Maßgabe, dass, wenn m 1 ist, n 1 bis 5 ist; x 1 oder 2 ist; und y 1 oder 2 ist; und x + y = 3; wobei die polymeren Mikrokügelchen einen Feststoffgehalt in dem Bereich von 10 bis 60 Gewichtsprozent, bezogen auf das Gewicht der Mikrokügelchen und Wasser, aufweisen; wobei die polymeren Mikrokügelchen eine durchschnittliche Teilchengröße in dem Bereich von 1 $\mu$m bis 25 $\mu$m aufweisen.

**10.** Zusammensetzung nach Anspruch 9, wobei das Polysiloxan durch Formel IV dargestellt wird:

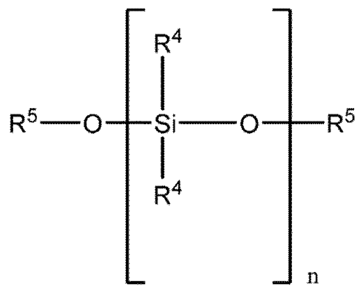

IV

wobei jedes $R^4$ unabhängig $C_1$-$C_{30}$-Alkyl, O-$C_1$-$C_6$-Alkyl oder H ist, mit der Maßgabe, dass mindestens ein $R^4$ $C_1$-$C_{30}$-Alkyl ist; jedes $R^5$ unabhängig $C_1$-$C_{30}$-Alkyl, H oder $Si(R^6)_3$ ist; wobei jedes $R^6$ unabhängig $C_1$-$C_6$-Alkyl ist; und n von 4 bis 10.000 ist.

**11.** Zusammensetzung nach Anspruch 10, wobei jedes $R^4$ Methyl ist; n von 10 bis 5000 ist; und jedes $R^5$ H ist.

**12.** Zusammensetzung nach Anspruch 10, wobei die polymeren Kompositmikrokügelchen eine durchschnittliche Teilchengröße in dem Bereich von 1,5 µm bis 15 µm aufweisen; wobei die polymeren Kompositmikrokügelchen ferner zu 1 bis 10 Gewichtsprozent Struktureinheiten eines mehrfach ethylenisch ungesättigten nichtionischen Monomers umfassen, bezogen auf das Gewicht des organophosphatfunktionalisierten Polymers; und wobei das polymerisierbare organische Phosphat oder ein Salz davon dargestellt durch Formel II:

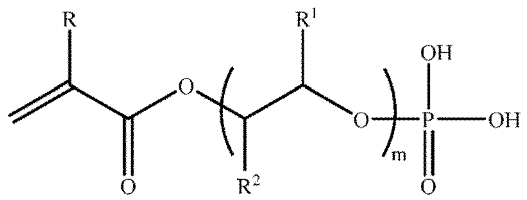

II ;

oder ein Salz davon; wobei m von 3 bis 8 ist; oder
b) die Verbindung der Formel III:

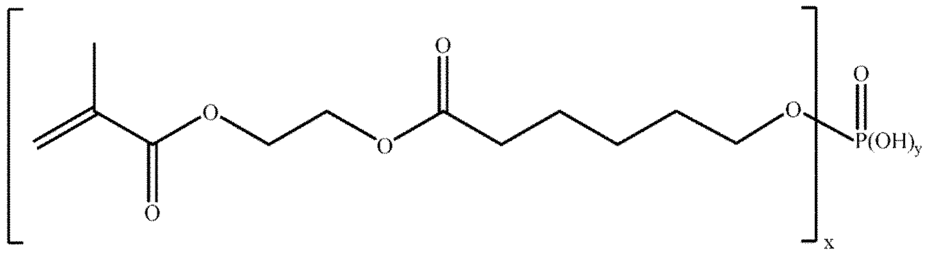

III.

## Revendications

**1.** Procédé de préparation d'une dispersion aqueuse de microsphères composites à fonctionnalisation phosphate organique comprenant l'étape de mise en contact, dans des conditions de polymérisation, d'une dispersion aqueuse de premières microsphères composites comprenant un polysiloxane et des motifs structuraux d'un premier monomère non ionique à insaturation monoéthylénique avec des monomères de premier stade comprenant, sur la base

du poids des monomères de premier stade, a) de 0,05 à 5 pour cent en poids d'un phosphate organique polymérisable ou d'un sel de celui-ci ; et b) de 85 à 99,95 pour cent en poids d'un deuxième monomère non ionique à insaturation monoéthylénique, pour développer les premières microsphères composites pour former une dispersion aqueuse de deuxièmes microsphères composites à fonctionnalisation phosphate organique, dans lequel les premières microsphères composites ont une taille moyenne de particules dans la plage allant de 1 µm à 15 µm et les deuxièmes microsphères composites ont une taille moyenne de particules dans la plage allant de 1,1 µm à 25 µm ; et dans lequel le phosphate organique polymérisable est représenté par la Formule I :

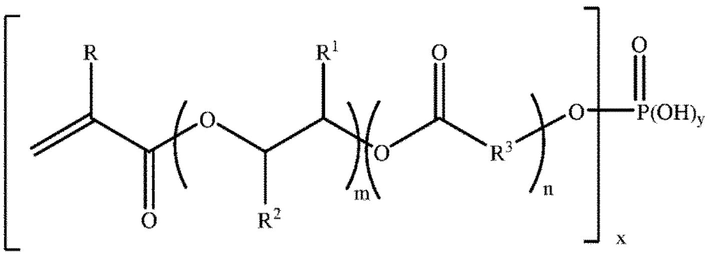

I ;

ou un sel de celui-ci ; dans lequel R est H ou $CH_3$, dans lequel $R^1$ et $R^2$ sont chacun indépendamment H ou $CH_3$, à condition qu'il n'y ait pas deux groupes $CR^2CR^1$ adjacents substitués chacun avec des groupes méthyle ; chaque $R^3$ est indépendamment un alkylène en $C_2$ à $C_6$ linéaire ou ramifié ; m va de 1 à 10 et n va de 0 à 5, à condition que lorsque m est 1, n aille de 1 à 5 ; x vaut 1 ou 2 ; et y vaut 1 ou 2 ; et x + y = 3.

**2.** Procédé selon la revendication 1 dans lequel le polysiloxane est représenté par la Formule IV :

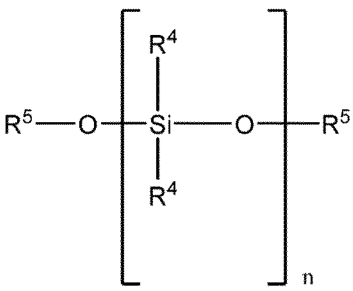

IV

dans lequel chaque $R^4$ est indépendamment alkyle en $C_1$ à $C_{30}$, O-alkyle en $C_1$ à $C_6$, ou H, à condition qu'au moins un $R^4$ soit un alkyle en $C_1$ à $C_{30}$ ; chaque $R^5$ est indépendamment alkyle en $C_1$ à $C_{30}$ H, ou $Si(R^6)_3$ ; dans lequel chaque $R^6$ est indépendamment alkyle en $C_1$ à $C_6$ ; et n va de 4 à 10 000.

**3.** Procédé selon la revendication 2 dans lequel chaque $R^4$ est méthyle.

**4.** Procédé selon la revendication 2 dans lequel les deuxièmes microsphères ont une taille de particules dans la plage allant de 1,5 µm à 20 µm ; et dans lequel le monomère phosphate organique est représenté par

a) le composé de formule II :

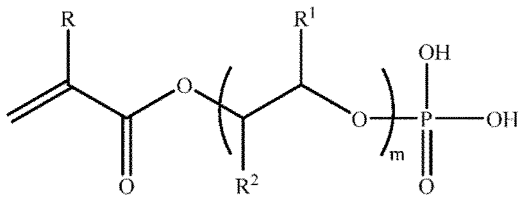

II

;

ou un sel de celui-ci ; dans lequel m va de 3 à 8 ; ou

b) le composé de formule III :

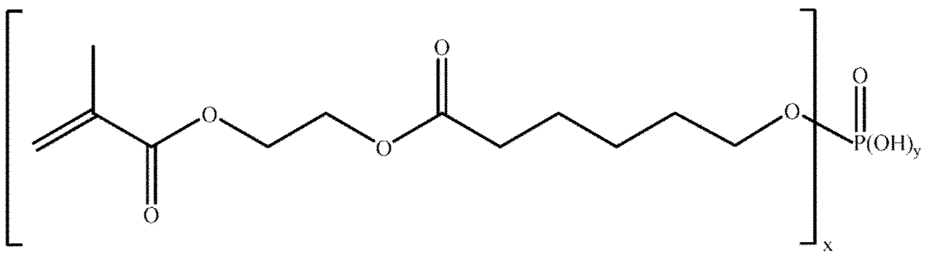

III

.

**5.** Procédé selon la revendication 4 dans lequel les monomères de premier stade comprennent en outre de 0,1 à 14,95 pour cent en poids, sur la base du poids des monomères de premier stade, d'un monomère non ionique à insaturations éthyléniques multiples.

**6.** Procédé selon la revendication 2 dans lequel les premières microsphères composites sont préparées par mise en contact dans des conditions de polymérisation d'une dispersion aqueuse d'un polysiloxane et d'un premier monomère à insaturation monoéthylénique.

**7.** Procédé selon la revendication 5 dans lequel la dispersion de deuxièmes microsphères composites à fonctionnalisation phosphate organique est en outre mise à réagir avec un monomère non ionique à insaturation monoéthylénique de deuxième stade, en présence d'un initiateur/couple redox hydrosoluble.

**8.** Procédé selon la revendication 1 qui comprend en outre l'étape de mise en contact de la dispersion aqueuse de microsphères composites à fonctionnalisation phosphate organique avec un ou plusieurs composants choisis dans le groupe constitué de liants, épaississants, pigments, biocides, solvants, dispersants, coalescents, polymères opaques, et agents d'allongement.

**9.** Composition comprenant une dispersion aqueuse de microsphères composites polymères comprenant de 0,3 à 70 pour cent en poids d'un polysiloxane et de 30 à 99,7 pour cent en poids d'un polymère à fonctionnalisation phosphate organique, dans laquelle le polymère à fonctionnalisation phosphate organique comprend, sur la base du poids du polymère de phosphate organique, de 85 à 99,9 pour cent en poids de motifs structuraux d'un monomère non ionique à insaturation monoéthylénique et de 0,05 à 5 pour cent en poids de motifs structuraux d'un phosphate organique polymérisable ou d'un sel de celui-ci, qui est représenté par le composé de Formule I :

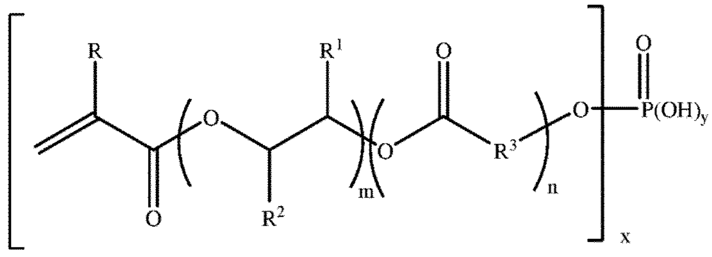

I

ou un sel de celui-ci ; dans laquelle R est H ou $CH_3$, dans laquelle $R^1$ et $R^2$ sont chacun indépendamment H ou $CH_3$, à condition qu'il n'y ait pas deux groupes $CR^2CR^1$ adjacents qui sont substitués chacun avec des groupes méthyle ; chaque $R^3$ est indépendamment un alkylène en $C_2$ à $C_6$ linéaire ou ramifié ; m va de 1 à 10 et n va de 0 à 5, à condition que lorsque m est 1, n aille de 1 à 5 ; x vaut 1 ou 2 ; et y vaut 1 ou 2 ; et x + y = 3 ; dans laquelle les microsphères polymères ont une teneur en solides dans la plage allant de 10 à 60 pour cent en poids, sur la base du poids des microsphères et de l'eau ; dans laquelle les microsphères polymères ont une taille moyenne de particules dans la plage allant de 1 μm à 25 μm.

**10.** Composition selon la revendication 9 dans laquelle le polysiloxane est représenté par la Formule IV :

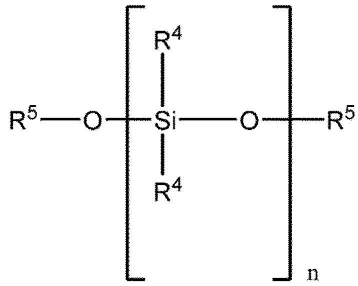

IV

dans laquelle chaque $R^4$ est indépendamment alkyle en $C_1$ à $C_{30}$, O-alkyle en $C_1$ à $C_6$, ou H, à condition qu'au moins un $R^4$ soit un alkyle en $C_1$ à $C_{30}$ ; chaque $R^5$ est indépendamment alkyle en $C_1$ à $C_{30}$ H, ou $Si(R^6)_3$ ; dans laquelle chaque $R^6$ est indépendamment alkyle en $C_1$ à $C_6$ ; et n va de 4 à 10 000.

**11.** Composition selon la revendication 10 où chaque $R^4$ est méthyle ; n va de 10 à 5000 ; et chaque $R^5$ est H.

**12.** Composition selon la revendication 10 dans laquelle les microsphères composites polymères ont une taille moyenne de particules dans la plage allant de 1,5 μm à 15 μm ; dans laquelle les microsphères composites polymères comprennent en outre de 1 à 10 pour cent en poids de motifs structuraux d'un monomère non ionique à insaturations éthyléniques multiples, sur la base du poids du polymère à fonctionnalisation phosphate organique ; et dans laquelle le phosphate organique polymérisable ou un sel de celui-ci est représenté par la Formule II :

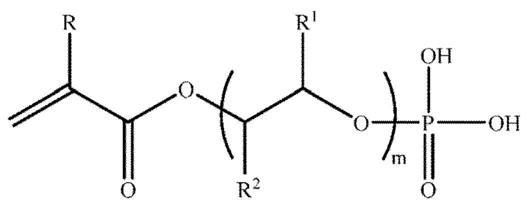

II ;

ou un sel de celui-ci ; dans laquelle m va de 3 à 8 ; ou
b) le composé de formule III :

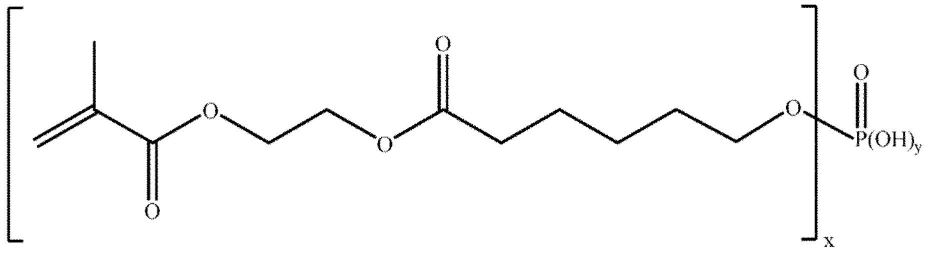

III.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 3031837 A
- US 9809705 B2
- US 9808413 B2
- JP 04489052 B
- JP 04794313 B
- JP 03821719 B
- JP 03784292 B
- JP 03770815 B
- JP 03669898 B
- JP 03580754 B
- JP 05231004 B
- US 8686096 B
- US 7829626 B


### Non-patent literature cited in the description


- **KALIHARI et al.** *Rev. Sci. Instrum.,* 2013, vol. 84, 035104